# EUROPEAN PATENT SPECIFICATION

(11) **EP 2 543 710 B1**
(45) Date of publication and mention of the grant of the patent: **13.11.2013**
(21) Application number: 12173829.8
(22) Date of filing: 27.06.2012
(51) Int. Cl.: C09J 7/02, C09J 4/00

(54) **Method and apparatus for producing pressure-sensitive adhesive sheet**
Verfahren und Vorrichtung zur Herstellung eines druckempfindlichen Klebeblatts
Procédé et appareil de production de feuille adhésive sensible à la pression

(30) Priority: 08.07.2011 JP 2011151939
(43) Date of publication of application: 09.01.2013
(73) Proprietor: Nitto Denko Corporation, Osaka 567-8680 (JP)
(72) Inventor: Nakashima, Tooru, Ibaraki-shi, Osaka 567-8680 (JP); Yamane, Toshihisa, Ibaraki-shi, Osaka 567-8680 (JP)
(74) Representative: Grünecker, Kinkeldey, Stockmair & Schwanhäusser

(56) References cited:
- EP-A1- 2 110 421
- FR-A- 1 432 713
- DATABASE WPI Week 200364 Thomson Scientific, London, GB; AN 2003-673592 XP002688168, & JP 2003 034778 A (NITTO DENKO CORP) 7 February 2003 (2003-02-07)
- DATABASE WPI Week 199213 Thomson Scientific, London, GB; AN 1992-099937 XP002688169, & JP 4 041577 A (SEKISUI CHEM IND CO LTD) 12 February 1992 (1992-02-12)

## Description

### BACKGROUND OF THE INVENTION

### 1. Field of the Invention

This invention relates to a method and an apparatus for producing a pressure-sensitive adhesive sheet in which light is applied to a photopolymerizable composition layer coated on a sheet-like, a tape-like, or a film-like base material, whereby the photopolymerizable composition layer is photopolimerized to obtain a pressure-sensitive adhesive layer.

### 2. Description of the Related Art

Conventionally, a method of producing a pressure-sensitive adhesive sheet is known in which a photopolymerizable composition layer is coated on a film-like base material to have an appropriate thickness, and then light is applied to the photopolymerizable composition layer after coating for polymerization, whereby a pressure-sensitive adhesive layer is formed.

In this method, a polymerization reaction is inhibited due to oxygen in an atmosphere of light irradiation to the photopolymerizable composition layer. Thus, some thought is given for removing oxygen. For instance, light is applied to a photopolymerizable composition layer coated on a base material under an inert gas atmosphere. Moreover, light is applied to a coating surface of a base material on which a photopolymerizable composition layer is coated, the coating surface having an optical transparent film joined thereto for interception of air. See Japanese Patent Publications H03-285975 and H03-285974.

The conventional method, however, has the following problems.

One problem may arise that in application of light to a photopolymerizable composition layer under an inert gas atmosphere, a monomer easy for evaporation in the photopolymerization composition evaporates.

Since a portion of the monomer also evaporates from a surface of the photopolymerizable composition layer due to heat from a polymerization reaction, a mixture of two or more types of monomers having different boiling points is used as a photopolymerizable composition layer. In this case, each monomer has a different amount of evaporation. As a result, another problem may also arise that a composition ratio of the monomer varies and target adhesion properties decrease.

Here, increasing a flow rate of inert gas can achieve decreased oxygen concentration under an inert gas atmosphere. On the other hand, a wind is readily generated in the atmosphere as a flow rate of inert gas increases. As a result, such problem may arise that the wind promotes partial evaporation of the monomer from the surface of the photopolymerizable composition layer. Moreover, there is a disadvantage that costs associated with increased usage of inert gas may be increased.

The foregoing problems do not occur in a method in which light is applied while a transparent film is joined to a photopolymerizable composition layer on a coating surface of a base material. On the other hand, in order to remove with ease the optical transparent film from the photopolymerizable composition layer on the base material, it is necessary to perform a releasing treatment, such as application of silicone resin to the optical transparent film. Consequently, the number of processes and costs are increased. Moreover, the releasing treatment may lead to contamination within the process.

### SUMMARY OF THE INVENTION

This invention has been made regarding the state of the art noted above. This invention has one object to provide a method and an apparatus for producing a pressure-sensitive adhesive sheet that enables prevention of monomer evaporation and of reduction in adhesive properties due to the evaporation, and enables stable low oxygen concentration.

Additional features of the invention will be set forth in the description which follows, and in part will be apparent from the description, or may be learned by practice of the invention.

One example of the invention is a method of producing a pressure-sensitive adhesive sheet through photopolymerizing a photopolymerizable composition layer coated on a base material to obtain a pressure-sensitive adhesive layer. The method includes providing at least one inert-gas supply section in a coating section and a light-irradiating section that are sealingly coupled to each other at a side of the coating section where a base material enters, and spraying inert gas toward the base material, the coating section coating a photopolymerizable composition onto the base material and the light-irradiating section applying light to the photopolymerizable composition layer after coating.

According to the foregoing method, inert gas is sprayed to the base material at the entrance side of the coating section. Thus, introduction of oxygen together with the base material transported into the coating section can be avoided. Consequently, a decreased amount of oxygen in the coating section can be achieved. A decreased amount of oxygen introduced into the coating section results in a decreased supplying amount of inert gas for replacing oxygen in the coating section and the light-irradiating section sealingly coupled to each other. As a result, an oxygen concentration can be readily kept constant by a decreased supplying amount of inert gas in each section.

In the foregoing method, the inert gas supply section is preferably a chamber and the chamber is preferably filled with inert gas continuously.

According to this method, continuous filling with inert gas makes an internal pressure within the chamber higher than the atmospheric pressure. Consequently, an exhaust stream of inert gas is generated toward an entrance of the chamber formed on a transport path of the base material and an entrance of the coating section. As a result, oxygen introduced from the entrance of the chamber together with the base material can be intercepted. Simultaneously, inert gas can be supplied into the coating section.

In the foregoing method, an exhaust stream of inert gas may also be generated within the chamber that is directed toward an entrance of the chamber through spraying inert gas to the base material obliquely in an opposite direction from a transport direction.

According to this method, a flow velocity of inert gas that flows outside from the entrance of the chamber accelerates. Consequently, introduction of oxygen into the coating section can surely be prevented.

Moreover, in the foregoing method, the above coating section and the light-irradiating section can be filled with inert gas.

In this case, the coating section and the light-irradiating section each preferably have an internal pressure higher than the chamber.

According to this method, the coating section and the light-irradiating section each have an internal pressure higher than the chamber. As a result, introduction of oxygen into the coating section as well as the light-irradiating section can surely be prevented.

Moreover, in the foregoing method, inert gas is preferably applied from a position lower than the base material transported from the coating section and the light-irradiating section, the base material having a coating surface of the photopolymerizable composition directed upward.

According to this method, inert gas is indirectly sprayed to the photopolymerizable composition coated on the base material. Thus, evaporation of the monomer contained in the photopolymerizable composition layer can be suppressed. Consequently, a pressure-sensitive adhesive having stable characteristic can be obtained.

Moreover, in the foregoing method, a back surface of the base material to be transported in the light-irradiating section may be cooled.

Cooling the back surface of the base material can surely suppress evaporation of the monomer contained in the photopolymerizable composition layer.

Here upon cooling of the base material, cooled inert gas is circulated within a cooling roll in contact with the back surface of the base material. Thereafter, the inert gas is supplied into the coating section and the light-irradiating section. Such aspect is preferable.

According to this method, the inert gas is used as a coolant for cooling. In addition, the cooled and used inert gas is reused and supplied into the coating section and the light-irradiating section. Consequently, the usage of the inert gas and finally running costs can be reduced.

Another example of the invention is an apparatus for producing a pressure-sensitive adhesive sheet through photopolymerizing a photopolymerizable composition layer coated on a base material to obtain a pressure-sensitive adhesive layer. The apparatus includes at least one inert gas supply device for spraying inert gas to the base material to be transported, a coating section that is coupled to the inert gas supply device for coating a photopolymerizable composition onto the base material, a light-irradiating section that is coupled to the coating section for applying light to the photopolymerizable composition coated on the base material within the coating section, and a collecting section for collecting the base material having a pressure-sensitive adhesive layer formed thereon by the light-irradiating section.

This configuration may achieve suitable implementation of the above method.

Moreover, in the foregoing configuration, an inert gas supply section is preferably included for supplying inert gas into the coating section and the light-irradiating section.

According to this configuration, introduction of oxygen into the coating section and the light-irradiation section due to transport of the base material can surely be avoided. Consequently, an oxygen concentration inside thereof can be readily kept constant.

Moreover, the inert gas supply device in the foregoing configuration preferably circulates cooled inert gas within a cooling roll in contact with the back surface of the base material to be transported into the light-irradiation section, and thereafter supplies the inert gas into the coating section and the light-irradiating section.

According to this configuration, the inert gas is used as a coolant for cooling. In addition, the cooled and used inert gas is reused and supplied into the coating section and the light-irradiating section. Consequently, the usage of the inert gas and finally running costs can be reduced.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
Figure 1 is a schematic front view of an apparatus for producing a pressure-sensitive adhesive sheet.
Figure 2 is an enlarged front view of a light source and a light-irradiation window.
Figure 3 is an enlarged view of the surroundings of an inert-gas chamber in Example 3.
Figure 4 is an enlarged view of the surroundings of an inert-gas chamber in a modified apparatus.

### DESCRIPTION OF THE PREFERRED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

One embodiment of this invention will be described hereunder with reference to the drawings.

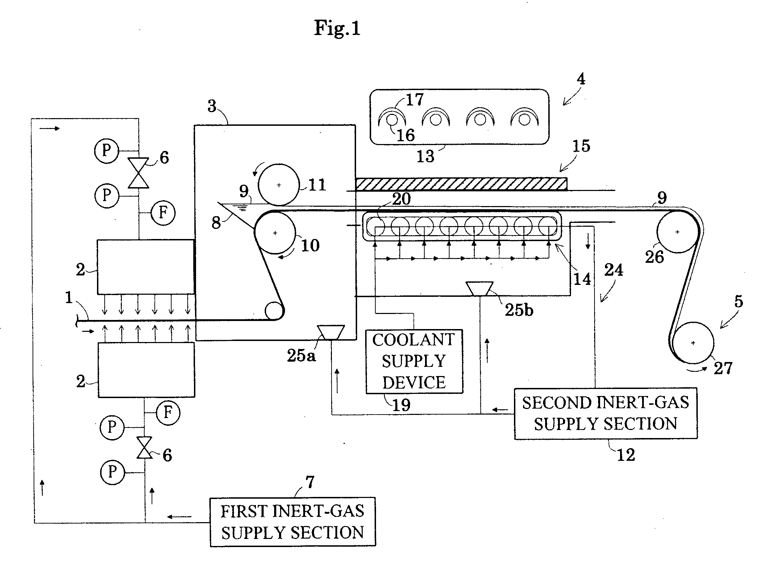

Figure 1 is a schematic view of an apparatus for producing a pressure-sensitive adhesive sheet according to one example of the invention. This example is to be described exemplifying the case of producing a double-faced adhesive sheet for the pressure-sensitive adhesive sheet, the double-faced adhesive sheet including a base material used as a separating liner.

As shown in Figure 1, an apparatus for producing a pressure-sensitive adhesive sheet according to one example of the invention includes an inert-gas chamber 2, a coating section 3, a light-irradiating section 4, and a winding section 5 arranged in this order from the upstream of a transport path for a base material of sheet-like, tape-like, or film-like. The coating section 3 and the light-irradiating section 4 perform each process while the base material 1 is transported in each section. The inert-gas chamber 2, the coating section 3, and the light-irradiating section 4 are coupled to each other. Each component will be described in detail hereinafter.

The inert-gas chamber 2 is formed of one pair of upper and lower chambers across the base material 1. Each chamber is communicated with a first inert-gas supply section 7 via a channel provided with a reducing valve 6. The channel includes thereon a pair of manometers P across the reducing valve 6 and one flowmeter F on the downstream of the reducing valve 6.

Each chamber has a punching metal at a blow-out port thereof for flow control such that inert gas to be supplied inside thereof can be injected uniformly. The inert gas can be injected uniformly with the punching metal having a bigger diameter and more holes. The apparatus according to this example can have the maximum flow rate of inert gas of 2400 L/min. Here, the lower flow rate is more preferable because of cost consideration. However, the extremely low flow rate cannot achieve the low concentration of oxygen, and thus the flow rate of 7 to 108 L/min. is more preferable.

A pair of manometers P detects pressures around the reducing valve 6, and sends the detection result to a controller. The flowmeter F detects a flow rate of inert gas downstream from the reducing valve 6, and sends the detection result to the controller. The controller monitors whether or not each detection value matches the set value fixed in advance in accordance with the detection results from the manometer P and the flowmeter, and opening of the reducing valve 6 is controlled as required.

The coating section 3 in this example adopts a reverse coater. Consequently, the reverse coater is formed of a liquid supply tank 8, a coating roll 10, and a metering roll 11.

The liquid supply tank 8 stores a photopolymerizable composition 9 for supply. The coating roll 10 coats the photopolymerizable composition 9 supplied at a given width from the liquid supply tank 8 onto the surface of the base material 1, and then transports it. The metering roll 11 controls a thickness of the photopolymerizable composition 9 coated on the base material 1.

The coating section 3 is not limited to the reverse coater, but may have a configuration of another coating method, such as a gravure coater. That is, an approach of controlling a thickness of the photo polymerizable composition 9 can also vary appropriately in accordance with each coating method.

The coating section 3 is communicated with a second inert-gas supply section 12 via a channel such that inert gas is supplied thereinto.

The light-irradiating section 4 includes a light source section 13 provided in the external upper position thereof, a conveyor 14 provided inside thereof for transporting the base material 1, and a light-irradiation window 15 provided at the ceiling thereof.

The light source section 13 includes a light source 16, a reflector 17, and a light-transparent window 18. The light source 16 applies light, such as visible radiation and ultraviolet rays. The reflector 17 reflects light from the light source 16 toward the base material 1. Light from the light source 16 passes through the light-transparent window 18.

Light from the light source section 13 is controlled so as to have uniform illumination with respect to a width direction of the base material 1. A straight tube type light source is adopted as the light source 16. As shown in Figure 1, two or more (e.g. eight) light sources 16 are arranged along the transport path of the base material 1 such that a longitudinal direction of the light source 16 is orthogonal to a transport direction of the base material 1. Each light source 16 can set irradiation conditions independently. For instance, a front half of the light sources 16 (for example, the first to fourth light sources 16 from an enter side of the base material 1) can be set as to apply ultraviolet rays with lower intensity than the latter half of the light sources 16 (the fifth to eighth light sources 16 from the enter side of the base material 1).

Examples of the light source 16 include an electrodeless lamp, a metal halide lamp, a high-pressure mercury lamp, a chemical lamp, a black light lamp, and the like.

The conveyor 14 is formed of two or more cooling rolls 20 that enable to circulate inside the coolant supplied from an external coolant supply device 19.

The conveyor 14 cools the photopolymerizable composition layer 9 whose temperature rises with heat from the light source 16 or heat of polymerization generated through a polymerization reaction of the photopolymerizable composition layer 9 on the base material 1 by light from the light source 16 such that the photopolymerizable composition layer 9 have a temperature within a given range.

Specifically, the photopolymerizable composition layer 9 under polymerization is cooled as to have a temperature in a range of 60 °C to -30 °C, more preferably of 40°C to -20°C, more preferably of 20°C to -10°C. The photopolymerizable composition layer 9 under polymerization is cooled as to have a given temperature in the foregoing given range, whereby monomer evaporation upon polymerization can be reduced. An extremely low temperature of the photopolymerizable composition layer 9 under polymerization (e.g., -30°C or less) is not preferable, since a polymerization reaction velocity becomes extremely slow.

As a material of the cooling roll 20, a metal of high thermal conductivity, such as copper, aluminum, stainless steel is preferable, and stainless steel is especially preferable. In this example, it is more preferable to insert a liquid layer between the base material 1 and the conveyor 14, since this can achieve adhesion of the base material 1 and the conveyor 14, thereby obtaining increased thermal conductivity. The conveyor 14 in this example is arranged from the entrance to the exit of the light irradiating section 4. Alternatively, the conveyor 14 may be arranged, for example, in an area with more amount of monomer evaporation where initial polymerization is performed, such as an area from the entrance to the middle of the light irradiating section 4.

The cooling roll 20 cools the conveyor 14 for cooling the photopolymerizable composition layer 9 whose temperature rises with heat from the light source 16 or heat of polymerization generated through a polymerization reaction of the photopolymerizable composition layer 9 on the base material 1 by light from the light source 16 such that the photopolymerizable composition layer 9 has a temperature within a given range.

Here, the conveyor 14 may be a roller conveyor formed of the cooling roll 20 or may be a conveyor belt having an endless belt suspended over the cooling roll 20.

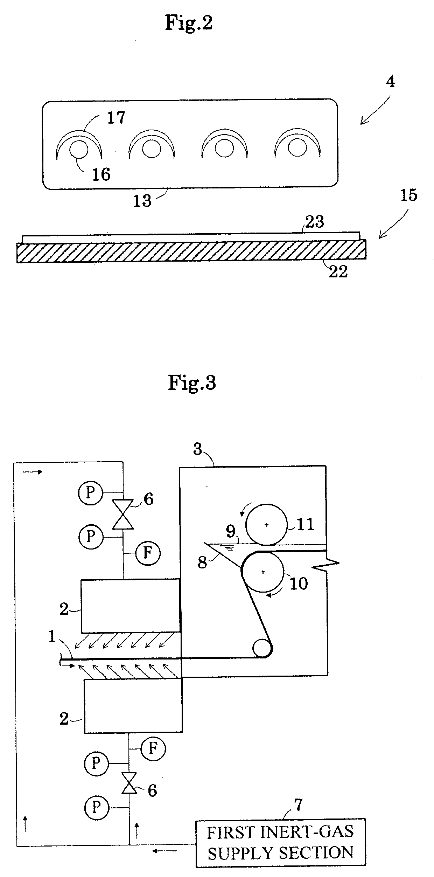

As shown in Figure 2, the light irradiation window 15 is provided with a quartz glass 22 and a light-transparent film 23 formed thereon.

The photopolymerizable composition layer 9 is placed adjacent to the light irradiation window 15. The distance between the light irradiation window 15 and the photopolymerizable composition layer 9 is preferably around 200mm or less, more preferably 100mm or less, more preferably 50mm or less, more preferably 20mm or less. When the distance exceeds 200mm, a disadvantage may arise that costs associated with increased usage of inert gas per unit volume for obtaining a given concentration may be increased. When the distance is 20mm or less, an oxygen concentration decreases, and thus a problem may arise that a polymerization reaction is inhibited.

The quartz glass 22 is not particularly imitated to a quartz glass as long as it has a visible optical transmittance of 90% or more and superior sealing property of the light irradiating section 4. In this case, it may, for example, a borosilicate glass.

The light-transparent film 23 has a property of cutting short wavelength light. That is because irradiation of the photo polymerization composition 9 with light containing short wavelength decreases release properties of the base material 1 and the pressure-sensitive adhesive layer produced photopolymerization. Consequently, short wavelength light is cut with the light-transparent 23.

Specifically, as the light-transparent film 23, a film that enables to cut short wavelength light (e.g., of 300 nm or less) by 90% or more is preferable, more preferably by 93% or more, more preferably 95% or more. In this example, the light-transparent film 23 having visible optical transmittance of 70% or more is used, whereby required optical transmittance can be acquired. The light-transparent film 23 with visible optical transmittance of 80% or more is more preferable, and that with visible optical transmittance of 90% or more is more preferable. The light-transparent film 23 has enough heat resistance to endure heat generated from the light source section 13. Examples of the light-transparent 23 with such properties include a polyester film. The dose of irradiation light with short wavelength thereof being cut by the light-transparent film 23 is optionally set in accordance with properties required for such as the pressure-sensitive adhesive layer. Here in this example, the dose falls within a range of 100 to 5000 mJ/cm², more preferably of 1000 to 4000 mJ/cm², more preferably of 2000 to 4000 mJ/cm².

The light-irradiating section 4 is communicated with the second inert-gas supply section 12 via a channel such that inert gas is supplied thereinto.

The coolant supply device 19 is communicated with the cooling roll 20 so as to supply a coolant (e.g., nitrogen gas or liquid nitrogen). The inert gas circulated within the cooling roll 20 is returned to an inert-gas circulator 24. Unless inert gas or a liquid for coolant damages the base material 1, the type thereof is not particularly limited. For instance, inert gas such as a mixture of nitrogen gas and a liquid can be used.

The inert-gas circulator 24 collects inert gas used in the cooling roll 20, and sends the inert gas to the second inert-gas supply unit 12. The second inert-gas supply unit 12 mixes fresh inert gas and the inert gas used in the cooling roll 20. Nozzles 25 each provided in the coating section 3 and the light-irradiating section 4 (i.e., an injection port 25a toward the coating section 3 and an injection port 25b toward the light-irradiating section 4) supply inert gas from the bottom of each section so as not to spray the inert gas directly onto the photopolymerizable composition layer 9. The nozzle 25 is not particularly limited in its arrangement or shape.

In this example, nitrogen gas is used as inert gas. Alternatively, various inert gas, such as argon gas and carbon dioxide gas can be used. With such inert gas, the coating section 3 and the light irradiating section 4 coupled to each other have an oxygen concentration of 5000 ppm or less, more preferably 1000 ppm or less, more preferably 500 ppm or less. The unnecessary inert gas after being supplied in the coating section 3 and the light irradiating section 4 coupled to each other is appropriately discharged via an exhaust system (not shown).

The winding section 5 includes a guide roller 26 and a base-material winding roll 27. The guide roller 26 guides the base material 1 subjected to irradiation of light by the light irradiating section 4 in a given direction. The base-material winding roll 27 winds up the polymerized base material 1 guided by the guide roller 26.

For instance, a plastic film such as a polyester film, non-woven fabric, woven fabric, paper, or metal foil is used as the base material 1.

The photopolymerizable composition 9 contains a monomer or a polymer thereof and a photopolymerization initiator and is polymerized upon light irradiation, thereby being formed into a pressure-sensitive adhesive. An acrylic, polyester, or epoxy photopolymerizable composition is used for the photopolymerizable composition 9. Among them, the acrylic photopolymerizable composition is particularly preferably used.

As the photopolymerizable composition 9, monomers consisting of an alkyl acrylate monomer as a main component, and a copolymerizable monomer containing a polar group are preferably used. Examples of the alkyl acrylate monomer include a vinyl monomer whose main component is a (meth)acrylic acid ester. More specifically, one or more monomers selected from those whose alkyl group has 1 to 14 carbon atoms are used as the main component, e.g., alkyl acrylate, alkyl metacrylate, in which the alkyl group may be partially substituted with hydroxy group; each of these contains an alkyl group, such as a methyl group, an ethyl group, a propyl group, a butyl group, an isobutyl group, a pentyl group, an isopentyl group, a hexyl group, a heptyl group, an octyl group, an isooctyl group, a nonyl group, an isononyl group, a decyl group, or an isodecyl group.

Examples of the copolymerizable monomer containing a polar group include an unsaturated acid, such as (meth)acrylate, itaconic acid, or 2-acrylamide propanesulphonic acid; a monomer containing a hydroxyl group, such as 2-hydroxyetyl(meth)acrylate, or 2-hydroxypropyl(meth)acrylate; and caprolactone(meth)acrylate. In addition, the copolymerizable monomer is not necessarily a monomer, and may be a dimer, such as a (meth)acrylic acid dimer.

Monomers comprising an alkyl acrylate monomer as the main component and a copolymerizable monomer containing polar groups are used in a ratio of: 70 to 99 % by weight to 30 to 1 % by weight, more preferably 80 to 96 % by weight to 20 to 4 % by weight. When the above monomers are used in a ratio within the above ranges, a favorable balance in terms of adhesiveness, cohesive strength, and the like can be attained.

Examples of a photo-polymerization initiator include a benzoin ether, such as benzoin methyl ether or benzoin isopropyl ether; a substituted benzoin ether, such as anisole methyl ether; a substituted acetophenone, such as dietoxyacetophenone, 2,2-diethoxyacetophenone; or 2,2-dimethoxy-2-phenyl acetophenone; a substituted--ketol, such as 2-methyl-2-hydroxy propiophenone; an aromatic sulfonyl chloride, such as 2-naphtalene sulfonyl chloride; and a photoactive oxime, such as 1-phenyl-1,1-propanedione-2-(o-ethoxycarbonyl)-oxime. The usage amount of such a photo-polymerization initiator is preferably 0.1 to 5 parts by weight, and more preferably 0.1 to 3 parts by weight, with respect to 100 parts by weight of total of the monomers comprising alkyl acrylate monomers serving as the main component and the copolymerizable monomers containing a polar group. When the amount of the photo-polymerization initiator falls below the above range, the polymerization velocity is decreased, whereby monomers tend to remain in large quantity, which is unfavorable from an industrial viewpoint. In contrast to this, when the amount of the same exceeds the range, molecular weight of the polymer is reduced, which leads to a decrease in cohesive strength of the adhesive. As a result, preferable adhesive property cannot be obtained.

In addition, as a crosslinking agent, a polyfunctional acrylate monomer is used. Examples thereof include an alkyl aclylate monomer containing two or more functional groups, such as trimethylolpropane triacrylate, pentaerythritol tetraacrylate, 1,2-ethyleneglycol diacrylate, 1,6-hexanediol diacrylate, and 1,12-dodecanediol diacrylate. A usage amount of the multifunctional acylate monomer depends on the number of the functional groups, and is preferaby 0.01 to 5 parts by weight, and more preferably 0.1 to 3 parts by weight, with respect to 100 parts total of the monomer comprising the alkyl acrylate monomer serving as the main component and the copolymerizable monomer containing a polar group. When the multifunctional acylate monomer is used in a ratio within the above range, favorable cohesive strength is maintained.

In addition, another crosslinking agent other than the multifunctional acrylate may be used in combination, depending on the purposes of the adhesive. Examples of the crosslinking agent to be used in combination include those which are generally used, such as an isocyanate crosslinking agent, an epoxy crosslinking agent, and an aziridine crosslinking agent. In the present invention, additives such as a tackifier may be used as necessary.

Description will be given next of the steps producing a double-faced adhesive sheet for the pressure-sensitive adhesive sheet, the double-faced adhesive sheet including the base material 1 used as a separating liner.

The base material 1 supplied and transported from an original master roll is transported between a pair of upper and lower inert gas chambers 2. The exhaust stream toward outside of the inert-gas chambers 2 and the entrance of the coating section 3 is formed while the transport space is filled with inert gas sprayed from the upper and lower sides. As a result, the base material 1 is transported into the coating section 3 while introduction of oxygen into the coating section 3 from outside due to transport of the base material 1 can surely be avoided.

The coating section 3 coats the photopolymerizable composition 9 onto the base material 1 so as to have a given width and a given thickness of the base material 1. The base material 1 with the photopolymerizable composition 9 coated thereon is transported from the coating section 3 to the light irradiating section 4. The inert gas subjected to filtration by the second inert gas supply section 12 is supplied to the coating section 3 from the bottom thereof.

The light irradiating section 4 passes light from the light source section 13 into the light irradiation window 15, and applies light having short wavelength light cut therefrom onto the photopolymerizable composition (photopolymerizable composition layer) 9 coated on the base material 1. Here, a cooler mechanism is provided on a back side of the base material 1 for supplying a coolant (e.g., a mixture of liquid nitrogen and nitrogen gas) to the cooling roll 20 from the coolant supply device 19. Consequently, the base material 1 is cooled from the back side thereof through cooling the conveyor 14 having superior thermal conductivity. As a result, evaporation of the monomer from the photopolymerizable composition layer 9 can be suppressed under the influence of heat accompanied with a photopolymerization reaction, etc.

Moreover, the light irradiating section 4 applies light having short wavelength light cut therefrom to the photopolymerizable composition layer 9 of the base material 1 until the photopolymerizable composition layer 9 has a rate of polymerization of at least 80% or more. A rate of polymerization of the photopolymerizable composition layer 9 of 80% or more is detected as under. That is, irradiation experiments are conducted, under various conditions such as irradiation quantity in the light irradiating section 4, to a sample with the photopolymerizable composition 9 pursuant to specifications of the product to be manufactured being coated onto the base material 1. The detection can be obtained experimentally through determining the rate of polymerization of the sample after the experiment. Alternatively, the detection can also be obtained through simulations using physical properties and characteristic of the photo polymerizable composition 9 determined in advance. As above, the photopolymerizable composition layer 9 is irradiated with light having short wavelength light cut therefrom upon starting photopolymerization. Thus, a heavy release phenomenon of the base material 1 and the pressure-sensitive adhesive layer can be prevented from occurring, the phenomenon resulting from irradiation of short-wavelength light irradiation upon starting photopolymerization. Consequently, release properties of the base material 1 are not eliminated.

The coolant (e.g., a mixture of liquid nitrogen and nitrogen gas) used in the cooling roll 20 is returned to the inert gas circulator 24 and then filtered. The second inert-gas supply section 12 mixes the coolant with fresh inert gas. The nozzles 25 each provided in the coating section 3 and the light-irradiating section 4 (i.e., an injection port 25a on a coating section 3 side and an injection port 25b on a light-irradiating section 4 side) supply inert gas so as not to spray the inert gas directly onto the photopolymerizable composition layer 9.

The winding section 5 winds up the base material 1 to which the light irradiating section 4 applies light to obtain the pressure-sensitive adhesive layer. Thus, a pressure-sensitive adhesive sheet is produced.

Hereinunder shown are measurement experiment results on an oxygen concentration in the coating section 3 and the light irradiating section 4 coupled to each other with an example as the case using the apparatus in Figure 1 and a comparative example as the case where the inert gas chamber 2 is not used in the apparatus in Figure 1.

### <Example 1>

Herein, the inert-gas chambers 2 were placed above and below the base material 1. Inert gas was supplied perpendicularly to the base material 1 by 7 L/min with the distance between the base material 1 and the inert-gas chambers 2 of 1.5mm and a transportation velocity of the base material 1 of 2m/min. A siliconized polyethylene film was used for the base material 1, and nitrogen gas was used for inert gas.

### <Example 2>

Herein, the inert-gas chambers 2 were placed above and below the base material 1. Inert gas was supplied perpendicularly to the base material 1 by 108 L/min with the distance between the base material 1 and the inert-gas chambers 2 of 10mm and a transportation velocity of the base material 1 of 10m/min. In all other respects, the experimental condition was rendered analogous to that of Example 1 to embody Example 2.

### <Example 3>

Herein, the inert-gas chambers 2 were placed above and below the base material 1. Inert gas was supplied to the base material 1 obliquely at an angle of 45 degrees in an opposite direction from the transport direction by 108 L/min with the distance between the base material 1 and the inert-gas chambers 2 of 10mm and a transportation velocity of the base material 1 of 10m/min, as shown in Figure 3. In all other respects, the experimental condition was rendered analogous to that of Example 1 to embody Example 3.

### <Comparative Example>

The transportation velocity of the base material 1 was set to be 10m/min. not using the inert gas chamber 2. A siliconized polyethylene film was used for the base material 1.

Table 1 shows the determined results of the oxygen concentration introduced into the coating section 3 in Examples 1 to 3 and Comparative Example.

| | Example 1 | Example 2 | Example 3 | Comparative Example |
|---|---|---|---|---|
| Inert-gas Supply Amount (L/min.) | 7 | 108 | 108 | None |
| Transportation Velocity (m/min.) | 2 | 10 | 10 | 10 |
| Distance between Base Material and Chamber (mm) | 1.5 | 10 | 10 | None |
| Direction of Inert-Gas Injection | Perpendicular | Perpendicular | Opposite Direction from Transport Direction at Angle of 15 degrees | None |
| Introduced Oxygen Concentration (L/min.) | 10∼50ppm | 122∼162ppm | 328∼358ppm | 21% |

Comparison is made based on presence or absence of the inert gas chamber 2. As is apparent from the results of the introduced oxygen concentration in Table 1, comparing Examples 1 to 3 in which inert gas is supplied with the inert gas chamber 2, oxygen having an concentration approximately equal to that of the air is introduced in the coating section 3 in Comparative Example in which no inert gas is supplied.

In contrast to this, in Examples 1 to 3 in which inert gas is supplied, it is apparent that the concentration of oxygen introduced into the coating section 3 can be reduced to 500 ppm or less. Moreover, it is apparent from Example 1 that the introduced oxygen concentration can be reduced as the transportation velocity becomes slow and the distance between the base material 1 and the chamber 2 becomes small. Moreover, in comparison of Examples 2 and 3, Example 3 can reduce more concentration of oxygen introduced into the coating section 3. Here, in Example 2, inert gas is supplied perpendicular to the base material 1, whereas in Example 3 inert gas is supplied in an opposite direction from the transport direction obliquely at an angle of 45 degrees.

As in the foregoing examples, the inert-gas chambers 2 is placed above and below the base material 1 at the entrance of the coating section 3 for supplying inert gas toward the base material 1. The oxygen introduced into the coating section 3 and the light irradiating section 4 is intercepted, and thus the oxygen concentration in each section can be suppressed. In other words, the coating section 3 and the light irradiating section 4 coupled to each other can have a lower and stable oxygen concentration.

Moreover, inert gas is supplied into the coating section 3 and the light irradiating section 4 coupled to each other via the inert-gas injection nozzles 25a and 25b from the bottom lower than the base material 1 so as not to be sprayed directly to the photopolymerizable composition layer 9. Consequently, evaporation of the monomer contained in the photopolymerizable composition layer 9 can be suppressed. As a result, a pressure-sensitive adhesive having target characteristic can be obtained.

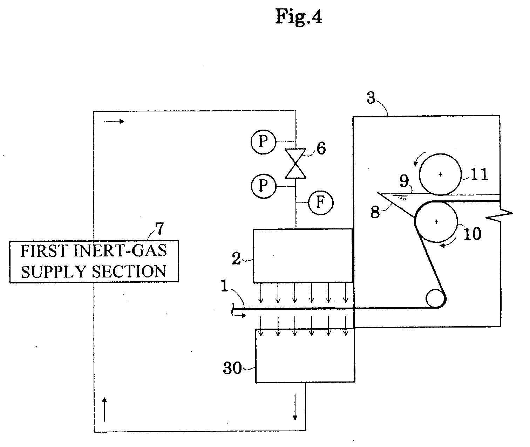

This invention may be embodied as the following aspects.
(1) The foregoing exemplary apparatus may include either the upper or lower inert-gas chamber 2.
(2) The foregoing exemplary apparatus may include the inert-gas chamber 2 on the upper side and a duct 30 on the lower side for discharging inert gas, as shown in Figure 4. The inert gas sucked from the duct 30 may be discharged as it is. The inert gas may be circulated and returned to the first inert-gas supply section 7 for filtering impurities, etc. and mixing the inert gas with fresh inert gas for refreshing and reuse.

It is preferable in this configuration to provide a side wall between the inert-gas chamber 2 and the duct 30. According to this configuration, suction of oxygen other than the inert gas from the duct 30 can be suppressed.

## Claims

1. A method of producing a pressure-sensitive adhesive sheet through photopolymerizing a photopolymerizable composition layer coated on a base material to obtain a pressure-sensitive adhesive layer, comprising:
providing at least one inert-gas supply section in a coating section and a light-irradiating section that are sealingly coupled to each other at a side of the coating section where a base material enters, and spraying inert gas toward the base material, the coating section coating a photopolymerizable composition onto the base material and the light-irradiating section applying light to the photopolymerizable composition layer after coating.

2. The method of producing a pressure-sensitive adhesive sheet according to claim 1, wherein
the inert gas supply section is a chamber that is filled with inert gas continuously.

3. The method of producing a pressure-sensitive adhesive sheet according to claim 1 or 2, wherein
an exhaust stream of inert gas is generated within the chamber that is directed toward an entrance of the chamber through spraying inert gas to the base material obliquely in an opposite direction from a transport direction.

4. The method of producing a pressure-sensitive adhesive sheet according to any one of claims 1 to 3, wherein
the coating section and the light-irradiating section are filled with inert gas.

5. The method of producing a pressure-sensitive adhesive sheet according to claim 4, wherein
the coating section and the light-irradiating section have an internal pressure higher than the chamber.

6. The method of producing a pressure-sensitive adhesive sheet according to any one of claims 1 to 5, wherein
inert gas is applied from a position lower than the base material transported from the coating section and the light-irradiating section, the base material having a coating surface of the photopolymerizable composition directed upward.

7. The method of producing a pressure-sensitive adhesive sheet according to any one of claims 1 to 7, wherein
a back surface of the base material to be transported in the light-irradiating section is cooled.

8. The method of producing a pressure-sensitive adhesive sheet according to claim 7, wherein
cooled inert gas is circulated within a cooling roll in contact with the back surface of the base material, and thereafter, the inert gas is supplied into the coating section and the light-irradiating section.

9. An apparatus for producing a pressure-sensitive adhesive sheet through photopolymerizing a photopolymerizable composition layer coated on a base material to obtain a pressure-sensitive adhesive layer, comprising:
at least one inert gas supply device for spraying inert gas to the base material to be transported;
a coating section that is coupled to the inert gas supply device for coating a photopolymerizable composition onto the base material;
a light-irradiating section that is coupled to the coating section for applying light to the photopolymerizable composition coated on the base material within the coating section; and
a collecting section for collecting the base material having a pressure-sensitive adhesive layer formed thereon by the light-irradiating section.

10. The apparatus for producing a pressure-sensitive adhesive sheet according to claim 9, further comprising:
an inert gas supply section for supplying inert gas into the coating section and the light-irradiating section.

11. The apparatus for producing a pressure-sensitive adhesive sheet according to claim 10, wherein
the inert gas supply device circulates cooled inert gas within a cooling roll in contact with the back surface of the base material to be transported into the light-irradiation section, and thereafter supplies the inert gas into the coating section and the light-irradiating section.

## Patentansprüche

1. Verfahren zum Herstellen einer druckempfindlichen Klebefolie mittels Photopolymerisation einer Schicht aus photopolymerisierbarer Zusammensetzung, die auf ein Trägermaterial geschichtet wird, um eine druckempfindliche Klebeschicht auszubilden, wobei das Verfahren umfasst:
Bereitstellen wenigstens eines Abschnitts zum Zuführen von inertem Gas in einem Be-schichtungsabschnitt und einem Lichtbestrahlungsabschnitt, die an einer Seite des Be-schichtungsabschnitts, an der ein Trägermaterial eintritt, dichtend verbunden sind, und Blasen von inertem Gas auf das Trägermaterial, wobei der Beschichtungsabschnitt das Trägermaterial mit einer photopolymerisierbaren Zusammensetzung beschichtet und der Lichtbestrahlungsabschnitt nach dem Beschichten Licht auf die photopolymerisierbare Zusammensetzung richtet.

2. Verfahren zum Herstellen einer druckempfindlichen Klebefolie nach Anspruch 1, wobei der Abschnitt zum Zuführen von inertem Gas eine Kammer ist, die kontinuierlich mit inertem Gas gefüllt wird.

3. Verfahren zum Herstellen einer druckempfindlichen Klebefolie nach Anspruch 1 oder 2, wobei
ein Strom zum Ableiten von inertem Gas in der Kammer, der auf einen Eintritt der Kammer zu gerichtet ist, erzeugt wird, indem inertes Gas schräg in entgegengesetzter Richtung zu der Transportrichtung auf das Trägermaterial geblasen wird.

4. Verfahren zum Herstellen einer druckempfindlichen Klebefolie nach einem der Ansprüche 1 bis 3, wobei
der Beschichtungsabschnitt und der Lichtbestrahlungsabschnitt mit inertem Gas gefüllt sind.

5. Verfahren zum Herstellen einer druckempfindlichen Klebefolie nach Anspruch 4, wobei
der Beschichtungsabschnitt und der Lichtbestrahlungsabschnitt einen Innendruck haben, der höher ist als der der Kammer.

6. Verfahren zum Herstellen einer druckempfindlichen Klebefolie nach einem der Ansprüche 1 bis 5, wobei
inertes Gas von einer Position aus zugeführt wird, die niedriger liegt als das Trägermaterial, das von dem Beschichtungsabschnitt und dem Lichtbestrahlungsabschnitt transportiert wird, und eine Fläche des Trägermaterials zum Beschichten mit der photopolymerisierbaren Zusammensetzung nach oben gerichtet ist.

7. Verfahren zum Herstellen einer druckempfindlichen Klebefolie nach einem der Ansprüche 1 bis 7, wobei
eine Rückseite des in dem Lichtbestrahlungsabschnitt zu transportierenden Trägermaterials gekühlt wird.

8. Verfahren zum Herstellen einer druckempfindlichen Klebefolie nach Anspruch 7, wobei gekühltes inertes Gas im Inneren einer Kühlwalze umgewälzt wird, die in Kontakt mit der Rückseite des Trägermaterials ist, und anschließend das inerte Gas in den Beschichtungsabschnitt und den Lichtbestrahlungsabschnitt eingeleitet wird.

9. Vorrichtung zum Herstellen einer druckempfindlichen Klebefolie mittels Photopolymerisation einer Schicht aus photopolymerisierbarer Zusammensetzung, die auf ein Trägermaterial geschichtet wird, um eine druckempfindliche Klebeschicht auszubilden, wobei die Vorrichtung umfasst:
wenigstens eine Vorrichtung zum Zuführen von inertem Gas, mit der inertes Gas auf das zu transportierende Trägermaterial geblasen wird;
einen Beschichtungsabschnitt, der mit der Vorrichtung zum Zuführen von inertem Gas verbunden ist, um das Trägermaterial mit einer photopolymerisierbaren Zusammensetzung zu beschichten;
einen Lichtbestrahlungsabschnitt, der mit dem Beschichtungsabschnitt verbunden ist, um Licht auf die in dem Beschichtungsabschnitt auf das Trägermaterial aufgetragene photopolymerisierbare Zusammensetzung zu richten; und
einen Sammelabschnitt zum Sammeln des Trägermaterials mit einer durch den Lichtbestrahlungsabschnitt darauf ausgebildeten druckempfindlichen Klebeschicht.

10. Vorrichtung zum Herstellen einer druckempfindlichen Klebefolie nach Anspruch 9, die des Weiteren umfasst:
einen Abschnitt zum Zuführen von inertem Gas, mit dem inertes Gas in den Beschichtungsabschnitt und den Lichtbestrahlungsabschnitt eingeleitet wird.

11. Vorrichtung zum Herstellen einer druckempfindlichen Klebefolie nach Anspruch 10, wobei die Vorrichtung zum Zuführen von inertem Gas gekühltes inertes Gas im Inneren einer Kühlwalze umwälzt, die in Kontakt mit der Rückseite des in dem Lichtbestrahlungsabschnitt zu transportierenden Trägermaterials ist, und sie das inerte Gas anschließend in den Beschichtungsabschnitt und den Lichtbestrahlungsabschnitt einleitet.

## Revendications

1. Procédé de production d'une feuille adhésive sensible à la pression par photopolymérisation d'une couche de composition photopolymérisable déposée sur un matériau de base afin d'obtenir une couche adhésive sensible à la pression, comprenant :
la fourniture d'au moins une section d'alimentation en gaz inerte dans une section de dépôt et une section d'irradiation de lumière, qui sont couplées de manière étanche l'une à l'autre sur un côté de la section de dépôt où pénètre un matériau de base, et la projection d'un gaz inerte vers le matériau de base, la section de dépôt déposant une composition photopolymérisable sur le matériau de base et la section d'irradiation de lumière appliquant de la lumière à la couche de composition photopolymérisable après dépôt.

2. Procédé de production d'une feuille adhésive sensible à la pression selon la revendication 1, dans lequel
la section d'alimentation en gaz inerte est une chambre remplie de gaz inerte de façon continue.

3. Procédé de production d'une feuille adhésive sensible à la pression selon la revendication 1 ou 2, dans lequel
un courant d'échappement de gaz inerte est généré à l'intérieur de la chambre, qui est dirigé vers une entrée de la chambre par projection de gaz inerte vers le matériau de base de manière oblique dans une direction opposée par rapport à la direction de transport.

4. Procédé de production d'une feuille adhésive sensible à la pression selon l'une quelconque des revendications 1 à 3, dans lequel
la section de dépôt et la section d'irradiation de lumière sont remplies de gaz inerte.

5. Procédé de production d'une feuille adhésive sensible à la pression selon la revendication 4, dans lequel
la section de dépôt et la section d'irradiation de lumière ont une pression interne supérieure à celle de la chambre.

6. Procédé de production d'une feuille adhésive sensible à la pression selon l'une quelconque des revendications 1 à 5, dans lequel
du gaz inerte est appliqué depuis une position plus basse que le matériau de base transporté par la section de dépôt et la section d'irradiation de lumière, le matériau de base ayant une surface de dépôt de la composition photopolymérisable dirigée vers le haut.

7. Procédé de production d'une feuille adhésive sensible à la pression selon l'une quelconque des revendications 1 à 7, dans lequel
une surface arrière du matériau de base à transporter dans la section d'irradiation de lumière est refroidie.

8. Procédé de production d'une feuille adhésive sensible à la pression selon la revendication 7, dans lequel
on fait circuler du gaz inerte refroidi à l'intérieur d'un rouleau de refroidissement en contact avec la surface arrière du matériau de base et le gaz inerte est ensuite amené dans la section de dépôt et la section d'irradiation de lumière.

9. Appareil de production d'une feuille adhésive sensible à la pression par photopolymérisation d'une couche de composition photopolymérisable déposée sur un matériau de base afin d'obtenir une couche adhésive sensible à la pression, comprenant :
au moins un dispositif d'alimentation en gaz inerte pour projeter un gaz inerte vers le matériau de base à transporter ;
une section de dépôt qui est couplée au dispositif d'alimentation en gaz inerte pour déposer une composition photopolymérisable sur le matériau de base ;
une section d'irradiation de lumière qui est couplée à la section de dépôt pour appliquer de la lumière à la composition photopolymérisable déposée sur le matériau de base dans la section de dépôt ; et
une section de récupération pour recueillir le matériau de base sur lequel est formée une couche adhésive sensible à la pression par la section d'irradiation de lumière.

10. Appareil de production d'une feuille adhésive sensible à la pression selon la revendication 9, comprenant en outre :
une section d'alimentation en gaz inerte pour fournir du gaz inerte dans la section de dépôt et la section d'irradiation de lumière.

11. Appareil de production d'une feuille adhésive sensible à la pression selon la revendication 10, dans lequel
le dispositif d'alimentation en gaz inerte fait circuler du gaz inerte refroidi à l'intérieur d'un rouleau de refroidissement en contact avec la surface arrière du matériau de base à transporter dans la section d'irradiation de lumière et fournit ensuite le gaz inerte dans la section de dépôt et la section d'irradiation de lumière.
